Europäisches Patentamt

European Patent Office

Office européen des brevets

(19)

(11) Numéro de publication: **0 179 715**
**B1**

# FASCICULE DE BREVET EUROPÉEN

(12)

(45) Date de publication du fascicule du brevet:
06.12.89

(21) Numéro de dépôt: 85402012.0

(22) Date de dépôt: 16.10.85

(51) Int. Cl.⁴: **H 04 M 11/06**, H 04 Q 11/04

(54) Circuit interface de raccordement d'un équipement numérique à une liaison multiplexe temporelle.

(30) Priorité: 16.10.84 FR 8415831

(43) Date de publication de la demande:
30.04.86 Bulletin 86/18

(45) Mention de la délivrance du brevet:
06.12.89 Bulletin 89/49

(84) Etats contractants désignés:
BE DE FR GB IT NL SE

(56) Documents cité:
EP-A-0 009 461
FR-A-2 503 497

ICC '84, IEEE INTERNATIONAL CONFERENCE ON
COMMUNICATIONS, LINKS FOR THE FUTURE, 14-
17 mai 1984, Amsterdam, NL, vol. 7, pages 141-144,
North-Holland Publishers B.V., Amsterdam, NL; J.-
P. BEHR et al.:" System concept of a PABX
integrating voice and data"
IEEE TRANSACTIONS ON COMMUNICATIONS,
vol. COM-30, no. 9, September 1982, pages 2163-
2171, IEEE, New York, US; H. BUENNING et al.:
"Subscriber stations in service inegrated optical
broad band communications system"

(73) Titulaire: TELIC ALCATEL, 12, rue de la Baume,
F-75008 Paris (FR)

(72) Inventeur: Gass, Raymond, 18, rue des Vergers
Boisenheim, F-67150 Erstein (FR)
Inventeur: Ruhlmann, André, 2A rue de Salenthal,
F-67440 Marmoutier (FR)

(74) Mandataire: Weinmiller, Jürgen, Lennéstrasse 9
Postfach 24, D-8133 Feldafing (DE)

LIBER, STOCKHOLM 1989

## Description

La présente invention a pour objet un circuit interface de raccordement d'un équipement numérique, émetteur-récepteur de données, au moins partiellement auto-géré, à une liaison multiplexe temporelle. L'équipement numérique est par exemple un poste téléphonique à afficheur, ou un processeur, ou une régie d'abonné multiservice.

La liaison multiplexe temporelle est préférablement une liaison bidirectionnelle conçue pour transmettre octet par octet, des données et/ou des signaux de parole classiquement numérisés.

Une telle liaison multiplexe, contrôlée par un module d'horloge, constitue par exemple un réseau local de communication de données, et/ou de signaux de parole entre les équipements connectés à elle; elle est alternativement susceptible d'être reliée à un noeud de commutation d'un réseau permettant d'atteindre des équipements desservis par d'autres liaisons multiplexes.

De manière connue, notamment exposée par le document FR-A-2 503 497, les postes téléphoniques se connectent à de telles liaisons multiplexes bidirectionnelles par des circuits interfaces convertisseurs, de type codec ou cofidec, qui desservent chacun un ou plusieurs postes tant en émission qu'en réception.

Les signaux analogiques fournis par le microphone d'un poste téléphonique sont convertis, par le circuit interface convertisseur qui le dessert, en octets qui correspondent chacun à un échantillon de parole. Ces octets sont transmis un par un sur une même voie de liaison temporelles au cours des trames successives sous le contrôle de l'agencement d'horloge régissant la liaison. Cet agencement d'horloge fournit notamment un signal d'horloge utilisé par le circuit de conversion pour son fonctionnement interne et un premier signal de synchronisation commandant l'émission des octets.

Le circuit de conversion, de type codec ou cofidec, desservant un poste téléphonique reçoit aussi un second signal de synchronisation de l'agencement d'horloge, pour déclencher la prise en compte des octets qui sont transmis à destination du poste considéré sur une même voie temporelle au cours des trames successives, les octets pris en compte étant ensuite convertis en signaux exploitables par le transducteur du poste desservi.

Du fait de la standardisation des circuits de conversion codec ou cofidec pour un type de codage choisi (loir A ou mu) et une liaison multiplexe temporelle de base choisie (24 ou 30, 32 voies), il est possible de raccorder par simple mise en parallèle des circuits codecs ou cofidecs de même standard sur une liaison multiplexe temporelle correspondante, tant que le nombre de voies temporelles nécessaires a ces circuits correspond au nombre de voies temporelles disponibles sur la liaison.

Par contre le raccordement d'un équipement numérique émetteurrécepteur de données à une liaison multiplexe temporelle nécessite classiquement l'adjonction d'une interface d'échange de données chargée de tenir compte des différences au niveau des horloges, des débits et/ou des formats existant entre l'équipement numérique et la liaison multiplexe temporelle afin d'en assurer la comptabilité.

En particulier les équipements numériques conçus pour émettre ou recevoir des données numériques comportent couramment une logique de gestion organisée autour d'un microprocesseur, au moins partiellement affecté à cette gestion. L'échange et/ou le traitement des données par les équipements numériques tirent souvent avantage de l'emploi de messages d'un format parfois variable et/ou supérieur à l'octet retenu de manière standard comme format de voie, pour les liaisons multiplexes temporelles bidirectionnelles de type téléphonique.

En conséquence les interfaces de données, associées à ces équipements pour leur connexion à des liaisons multiplexes temporelles, sont le plus souvent étudiées au cas par cas ; elles ne sont pas directement réutilisables, ce qui les rend coûteuses et pénalisantes dans la mesure où elles ne peuvent faire l' objet d'une production de masse et où elles conduisent à augmenter le nombre de circuits différents à conserver en tant que pièces de rechange.

La présente invention propose donc un circuit interface de raccordement d'un équipement numérique émetteur-récepteur de données, au moins partiellement auto-géré, à une liaison multiplexe temporelle bidirectionnelle apte à transmettre, sous forme d'octets, des signaux de parole, convertis sous forme binaire adéquate par des circuits interfaces spécialisée reliés en parallèle à la liaison multiplexe temporelle, ou des données numériques, sous le contrôle d'un module d'horloge régissant les émissions et les réceptions d'octets au moyen de signaux d'horloge, ainsi que de signaux de synchronisation associés aux différentes voies disponibles au cours de chaque trame sur la liaison multiplexe temporelle.

Ce circuit interface de raccordement d'un équipement numérique émetteur-récepteur de données numériques à une liaison multiplexe temporelle bidirectionnelle est apte à transmettre, sous forme d'octets, des signaux de parole convertis sous forme binaire adéquate par des circuits interfaces spécialisés reliés en parallèle à la liaison multiplexe temporelle, ou des données numériques, sous le contrôle d'un module d'horloge externe régissant les émissions et les réceptions d'octets au moyen de signaux d'horloge ainsi que de signaux de synchronisation associés aux différentes voies disponibles au cours de chaque trame sur la liaison multiplexe temporelle. Le circuit interface de raccordement comporte aussi un agencement de synchronisation composé en premier lieu d'un générateur local d'horloge, apte à recevoir du module d'horloge un signal d'horloge commun nécessaire au fonctionnement interne du circuit interface et un signal d'horloge de contrôle de débit en liaison dont la fréquence est égale ou sous-multiple de celle du signal d'horloge commun et en second lieu deux unités de sélection de voies, l'une en émission l'autre en réception, aptes à recevoir les signaux de synchronisation des voies temporelles correspondantes. Il dessert un équipement numérique émetteur-récepteur de données au moins partiellement auto-géré par un microprocesseur desservi par un bus de liaison au moyen duquel les données à émettre et à recevoir sont inchangées. Selon une caractéristique de l'invention le circuit interface de raccordement est doté d'une borne d'émission de bits et d'une borne de réception de bits permettant de le relier aux fils correspondants de la liaison multiplexe temporelle en parallèle avec d'autres circuits interface d'équipements émetteurs récepteurs de données numériques ou de signaux de paroles de manière à obtenir une connexion de circuit interface de raccordement à la liaison multiplexe numérique qui soit identique à celle prévue pour les circuits interfaces de conversion des signaux de parole et une adaptation automatique aux possibilités de débit offertes par la liaison multiplexe temporelle choisie, et en ce qu'il comporte un groupe de registres tampons inséré entre l'équipement numérique, au bus de liaison duquel il est relié pour les échanges de données, et deux groupes de registres l'un d'émission, l'autre de réception respectivement reliés l'un à la borne d'émission et l'autre à la borne de réception du circuit, les trois groupes de registres étant pilotés par un agencement de commande assurant simultanément le pilotage du groupe de registres de réception et d'émission en liaison avec l'agencement de synchronisation et le pilotage du groupe de registres tampons sous le contrôle du microprocesseur de l'équipement numérique desservi.

L'invention, ses caractéristiques et ses avantages sont précisés dans la description qui suit en liaison avec les figures répertoriées ci-dessous.

La figure 1 présente un schéma d'une interface de raccordement selon l'invention, dans son environnement constitué par une liaison multiplexe temporelle bidirectionnelle à laquelle elle se connecte et par d'autres circuits desservis ou associés à la liaison.

Les figures 2A, 2B, 2C présentent un schéma détaillé d'une interface de raccordement selon l'invention.

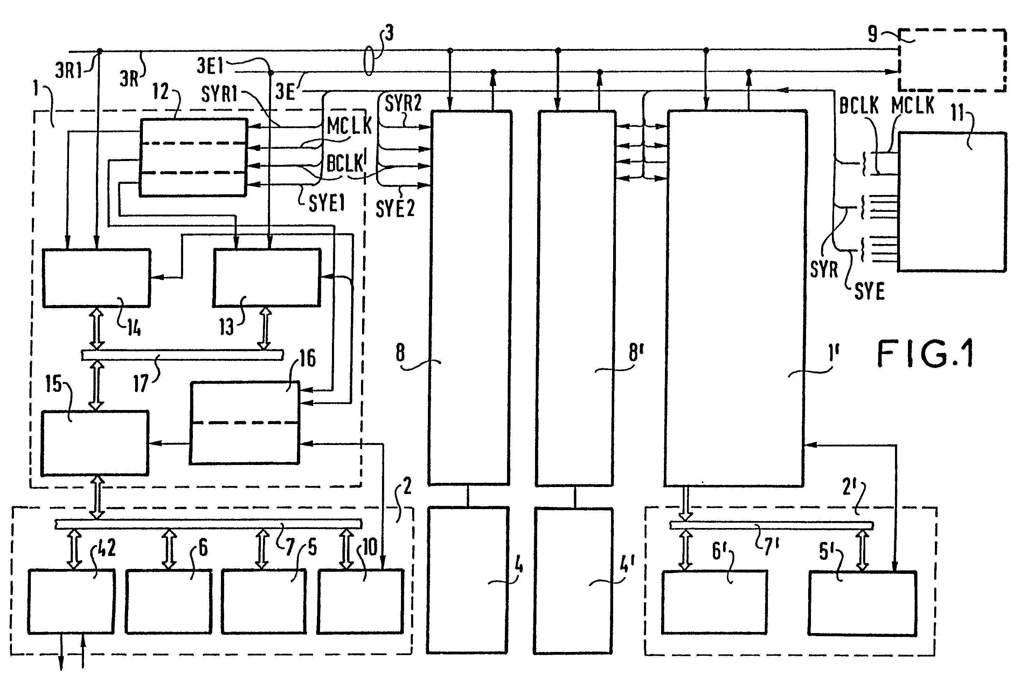

Le circuit interface de raccordement 1 présenté en figure 1 est destiné à raccorder un équipement numérique 2 émetteur-récepteur de données à une liaison multiplexe temporelle 3 desservant éventuellement d'autres circuits interfaces spécialisés identiques, tel le circuit interface de raccordement 1' d'un équipement numérique 2' également émetteur-récepteur de données, ou compatibles, tels les circuits interfaces de conversion 8, 8', de type codec, prévus pour desservir des équipements émetteurs-récepteurs de signaux de parole 4, 4'.

Les équipements numériques 2, 2' sont éventuellement très divers et vont par exemple de l'équipement d'affichage de postes téléphoniques à afficheurs, jusqu'aux processeurs de commande du réseau de commutation dont la liaison multiplexe 3 fait éventuellement partie. Les équipements numériques ont pour caractéristique commune d'être susceptibles d'être reliés à la liaison multiplexe temporelle 3 bidirectionnelle choisie, en raison de la comptabilité de forme et de débit des données qu'ils peuvent émettre ou recevoir avec celles admises par cette liaison multiplexe temporelle 3.

Pour des raisons bien connues de gestion des échanges de données, chaque équipement numérique 2 doit disposer de moyens lui permettant d'échanger des messages de signalisation avec les autres équipements avec lesquels il est apte à communiquer, soit pour un échange de données, soit pour l'établissement d'un chemin en vue d'un échange.

Ces moyens comportent préférablement un microprocesseur doté d'un ensemble de mémoires et éventuellement associé à un dispositif d'accès direct en mémoire, tel le microprocesseur 5 associé à un ensemble de mémoires 6 et à un dispositif d'accès direct en mémoire 10, avec lesquels il communique via un bus de liaison 7 pour l'équipement numérique 2. Une unité de raccordement 42 de type USART est également susceptible d'être connectée au bus de liaison 7 pour permettre un transfert bidirectionnel de données numériques avec un appareil extérieur non figuré.

De manière connue symbolisée par l'équipement 2' sur la figure 1, un microprocesseur 5' peut également se charger des opérations d'accès à un ensemble de mémoires 6', via un bus 7' qui les dessert, avec bien entendu une indisponibilité supplémentaire correspondante du microprocesseur 5' pour d'autres tâches.

Dans l'un où l'autre cas, le microprocesseur est amené à émettre et recevoir des données vers la liaison multiplexe temporelle 3, via le bus de liaison qui le dessert; si l'équipement comporte un dispositif d'accès direct en mémoire 10, celui-ci prend en charge les transferts des données qui lui sont demandés, vers l'ensemble de mémoires 6 à partir de la liaison multiplexe temporelle 3, ou en sens inverse.

Les équipements émetteurs-récepteurs de signaux de parole 4, 4' sont classiquement les équipements audio de postes téléphoniques et les circuits interfaces de conversion 8, 8' qui les desservent sont classiquement des codecs ou cofidecs ayant les fonctions évoquées plus haut.

La liaison multiplexe temporelle 3 bidirectionnelle est classiquement prévue pour desservir un ou plus habituellement plusieurs circuits interfaces spécialisés 1 et/ou 8 qui se partagent les voies temporelles disponibles. Elle est contrôlée par un module d'horloge 11 régissant les transferts de signaux de parole échantillonnés et numérisés et/ou de données numériques, par l'intermédiaire des voies temporelles; ces données et les échantillons de parole numérisés étant classiquement conformés en octets.

Le module d'horloge 11 fournit un signal d'horloge interne commun MCLK pour assurer le fonctionnement interne des circuits interfaces spécialisés 1 et 8 et un signal d'horloge de contrôle en débit en liaison BCLK. Le signal d'horloge BCLK de contrôle en débit sur la liaison multiplexe 3 a une fréquence égale ou sous-multiple de la fréquence du signal d'horloge interne commun MCLK, ce qui permet d'adapter le débit en ligne aux besoins et possibilités des équipements émetteursrécepteurs 2 ou 8 desservis.

Dans un exemple de réalisation la fréquence du signal d'horloge interne commun est de deux mille quarante huit kilohertz, pour des fréquences du signal d'horloge de contrôle en débit égales au produit de soixante quatre kilohertz par une puissance de deux au plus égale à deux puissance cinq.

Le module d'horloge 11 fournit aussi des signaux de synchronisation SYE, SYR pour les différents intervalles de temps correspondants aux différentes voies temporelles des deux liaisons unidirectionnelles 3E, 3R de sens inverse qui constituent la liaison multiplexe temporelle 3. Chaque circuit interface spécialisé 1 ou 8 est connecté par une borne à chaque liaison unidirectionnelle 3E, 3R, tel le circuit interface de raccordement 1 par des bornes 3E1, 3R1 aux deux fils constituant respectivement les liaisons unidirectionnelles 3E, 3R.

Chaque circuit interface spécialisé 1 ou 8 reçoit ainsi par deux liaisons MCLK et BCLK les signaux d'horloge de même nom qui sont communs à tous les circuits interfaces spécialisés d'une même liaison multiplexe temporelle et par deux liaisons spécifiques SYE, SYR des signaux de synchronisation spécifiques d'émission et de réception pour les voies affectées à ces circuits, telles les liaisons SYE1, SYR1 pour le circuit interface de raccordement 1 et les liaions SYE2, SYR2 pour le circuit interface de conversion 8.

Ceci permet d'obtenir l'affectation de une ou plusieurs voies sur chaque liaison unidirectionnelle 3E ou 3R au cours des trames successives en fonction des possibilités de la liaison et des besoins des équipements émetteurs-récepteurs qu'elle dessert, ceux-ci étant tous identiquement connectés par leurs circuits interfaces spécialisés 1 ou 8 qui ont leurs bornes respectives d'émission reliées à la liaison unidirectionnelle 3E, dite d'émission, et leurs bornes respectives de réception reliées à la liaison unidirectionnelle 3R dite de réception.

La liaison multiplexe temporelle 3 est susceptible d'être exploitée dans plusieurs configurations permettant l'échange des données et/ou signaux de parole numérisés entre équipement émetteurs-récepteurs de données.

Dans un premier exemple de configuration la liaison unidirectionnelle d'émission 3E et la liaison unidirectionnelle de réception 3R sont raccordées l'une à l'autre en un point symbolisé ici par l'élément 9, une telle configuration permet de relier les équipements émetteurs-récepteurs 2 ou 4 qui sont connectés à la liaison par leurs circuits interfaces spécialisés 1 ou 8 selon une organisation rigide dans lequel chaque circuit interface spécialisé se voit affecter une ou plusieurs voies fixes tant en émission qu'en réception.

Dans un second exemple de configuration, la liaison multiplexe 3 comporte un élément 9 contrôlant la liaison unidirectionnelle d'émission 3E et la liaison unidirectionnelle de réception 3R de manière à constituer un bus de liaison entre équipements émetteurs-récepteurs. L'élément contrôleur 9 est susceptible d'être constitué par un circuit interface de raccordement 1 associé à un microprocesseur par exemple selon l'un des arrangements présentés en figure 1.

Dans un troisième exemple de configuration, les liaisons unidirectionnelles 3E et 3R sont séparément reliées à un coupleur d'un noeud de commutation temporelle dans l'élément 9, un transcodeur permet aux équipements connectés à ces deux liaisons de communiquer avec des équipements raccordés à d'autres liaisons multiplexes temporelles non figurées, par exemple via au moins un central téléphonique temporel ou un étage d'un tel central.

Le circuit interface de raccordement 1 proprement dit, constitué d'un circuit intégré, est doté d'un groupe de registres de réception 13 relié à la borne 3R1 dont il reçoit les données numériques fournies par la liaison unidirectionnelle 3R à destination de l'équipement numérique 2 au cours des intervalles de temps de voie qui lui sont affectés au cours des trames successives. Le circuit interface 1 est également doté d'un groupe de registres d'émission 14 relié à la borne 3E1 à travers laquelle les données sont émises sur la liaison unidirectionnelle 3E au cours des intervalles en temps de voie qui lui sont affectés en émission.

Un agencement de synchronisation 12, recevant les signaux d'horloge MCLK et BCLK transmis par les liaisons de même référence et les signaux de synchronisation transmis par les liaisons SYE1 et SYR1, fournit séparément les signaux de commande assurant l'enregistrement des données numériques, qui proviennent de la liaison, dans l'ensemble de registre de réception 13 et la sortie des données numériques, à transmettre à la liaison unidirectionnelle 3E, à partir de l'ensemble de registre d'émission 14.

Un groupe de registres tampons 15 assure les échanges de données entre les groupes de registres 13 et 14, avec lesquels il est relié par un bus d'échange 17, et l'équipement émetteur-récepteur de données, au bus de liaison 7 duquel il est également relié.

Ce groupe de registres tampons 15 assure les échanges de données entre l'équipement numérique 2 et le circuit interface 1 en adoptant leur format, leur débit et leur rythme en vue de permettre leur échange avec les groupes de registres d'émission 14 ou de réception 13.

Les échanges de données entre groupes de registres 13, 14 et groupes de registres tampons 15, ainsi que ceux entre en derniers et l'équipement numérique 2, sont placés sous le contrôle d'un agencement de commande 16 de l'interface.

Cet agencement de commande 16 est relié en premier lieu à l'agencement de synchronisation pour les échanges de données impliquant les groupes de registre de réception 13 et d'émission 14, ainsi qu'en second lieu avec le microprocesseur 5 et/ou le dispositif d'accès direct en mémoire 10, spécifiquement reliés à lui pour les échanges entre groupe de registres tampons 15 et équipement numérique 2.

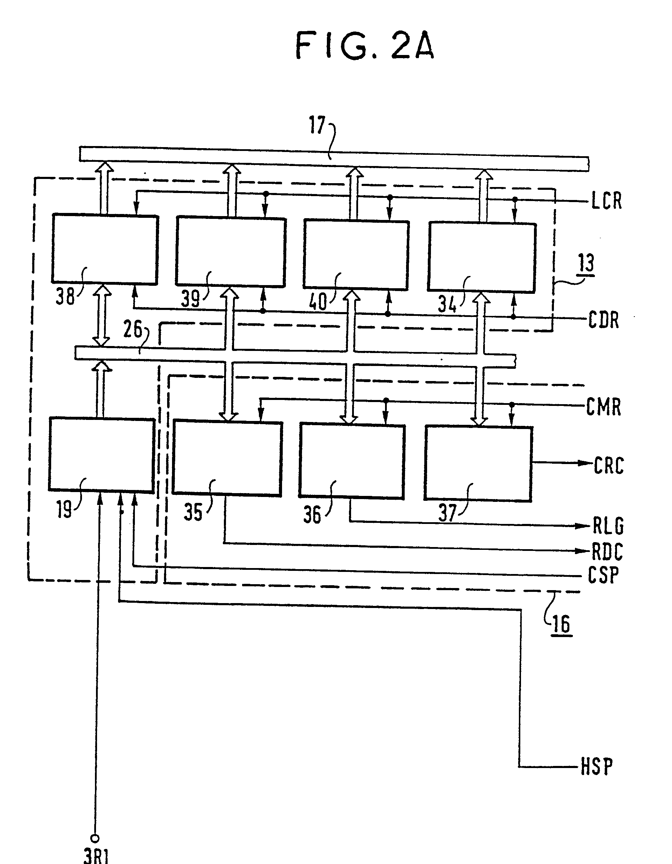

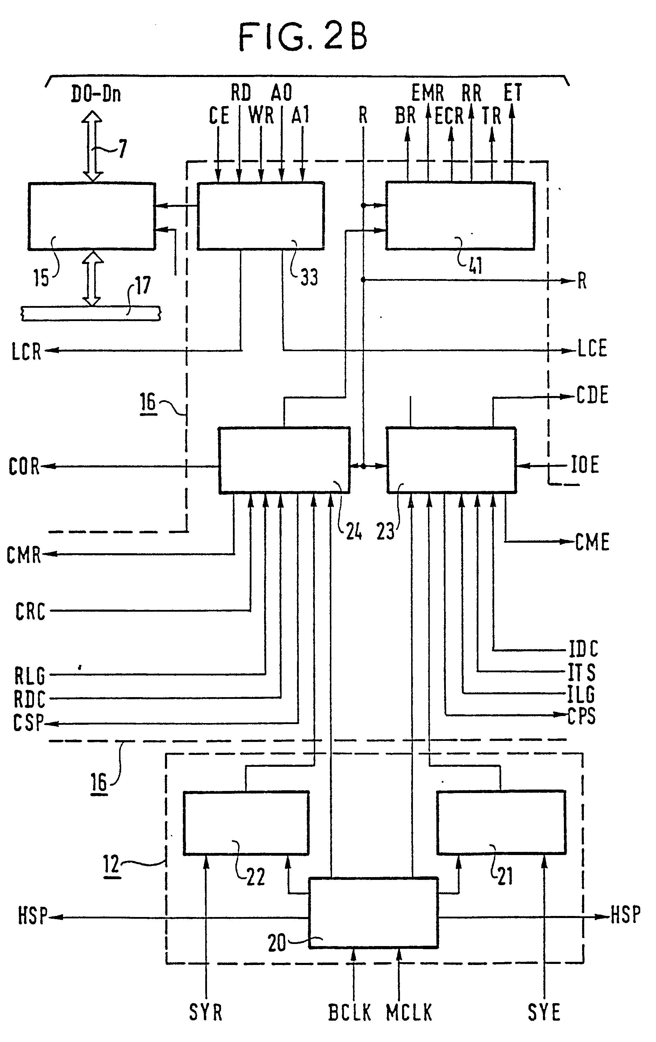

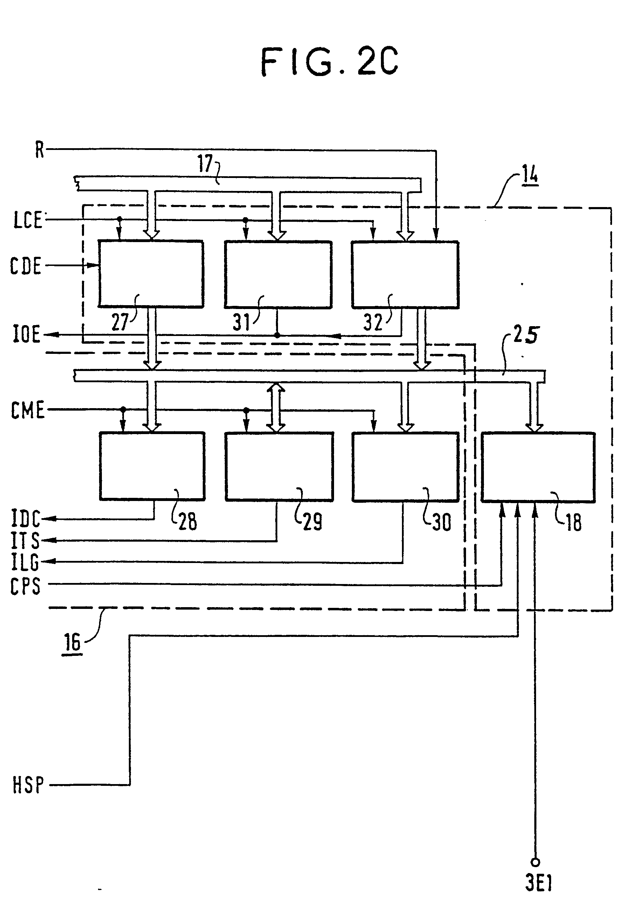

La structure et le fonctionnement de l'interface sont décrits avec plus de précision en liaison avec la figure 2, dans un cas où la liaison multiplexe temporelle 3 est une classique liaison à trame de cent vingt cinq microsecondes divisée en un nombre d'intervalles de temps, choisi parmi les multiples de huit, notamment vingt-quatre, trente-deux, soixante-quatre, cent vingt huit ou deux cent cinquante six voies temporelles d'un octet chacune, permettant donc la transmission d'un échantillon de parole par voie pour les communications téléphoniques ou la transmission par canal monovoie ou multivoie de données sous un format égal ou multiple de l'octet.

L'échange des signalisations pour les demandes, les commandes et les compte-rendus éventuels s'effectue ici sous forme de messages de même que l'envoi des données.

Le circuit interface 1 est donc apte à traiter différents types de messages comprenant les messages de données, mono ou multivoies et les messages de commande. Les messages de données sont ici précédés d'un octet drapeau, éventuellement d'un octet de longueur, et ils sont terminés par un octet de contrôle. Les messages de commande comportent deux premiers octets, qui définissent respectivement l'un l'équipement numérique 2 émetteur et l'autre l'équipement numérique 2 destinataire, un ou plusieurs octets intermédiaires définissant la commande proprement dite et un dernier octet qui est un octet de contrôle.

Il y a donc possibilité de choisir un protocole adapté aux besoins des terminaux de manière à ne pas pénaliser le réseau par une transmission de messages de commande inutilement longs ou complexes.

Les liaisons d'émission 3E et de réception 3R de la liaison multiplexe temporelle 3, constituées ici chacune par un fil, sont ici respectivement reliées l'une en sortie d'un registre intermédiaire d'émission18, ici de type parallèle-série, l'autre en entrée d'un registre intermédiaire de réception 19, ici de type série-parallèle, qui assurent l'un l'émission, l'autre la réception, octet par octet, vers ou à partir de la liaison multiplexe temporelle 3 pour le circuit interface 1.

En ce but chacun de ces registres intermédiaires 18, 19 est relié à l'agencement de synchronisation 12 en vue d'en recevoir des signaux d'horloge via deux liaisons HPS et HSP les desservant indépendamment pour la réception ou l'émission bit par bit.

Comme indiqué plus haut l'agencement de synchronisation 12 reçoit un signal d'horloge MCLK destiné à piloter le fonctionnement interne du circuit interface, ce signal d'horloge, qui est par exemple de 2048 KHz, est ici appliqué à un classique circuit générateur d'horloge 20.

Comme indiqué plus haut l'agencement de synchronisation 12 reçoit aussi un signal d'horloge BCLK du module d'horloge 11 évoquée en liaison avec la figure 1. Ce signal lui indique les intervalles de temps correspondants aux voies temporelles réservées au circuit interface 1.

Les registres intermédiaires 18, 19 du circuit interface 1 sont activés l'un en émission, l'autre en réception pour chacun des intervalles de temps de trame réservés par ce circuit interface 1 pour ses besoins.

Le circuit générateur d'horloge 20 reçoit également un signal d'horloge BCLK fourni par le module d'horloge 11 pour chacune des voies temporelles du canal établi sur la liaison multiplexe temporelle 3 pour le circuit interface 1.

Le circuit générateur d'horloge 20 attaque respectivement une unité de sélection de voie en émission 21 et une unité de sélection de voie en réception 22, toutes deux classiques, qui reçoivent aussi respectivement l'une un signal de synchronisation SYE et l'autre un signal de synchronisation SYR fournis l'un et l'autre par la base de temps de référence 11, pour les intervalles de temps de voie réservés au circuit interface 1.

Ces unités de sélection de voie 21 et 22 actionnent respectivement chacune un automate, l'un d'émission 23, l'autre de réception 24 et par leur intermédiaire le registre intermédiaire 18 ou 19 correspondant.

Les automates 23 et 24 sont constitués par exemple à l'aide de réseaux logiques programmés, groupés par paire, de manière que dans chacun d'entre eux un premier réseau logique assure la commande des états successifs d'une séquence opératoire alors que l'autre génère les signaux de validation vers les différents organes commandés, selon un processus bien connu.

L'automate d'émission 23 reçoit des signaux d'horloge élaborés par le circuit générateur d'horloge 20 de même que l'automate de réception 24, il produit un signal de commande d'émission CPS à destination du registre intermédiaire d'émission 18, lorsque toutes les conditions d'émission sont réunies et en particulier lorsque survient l'intervalle de temps d'émission de l'octet présent dans ce registre intermédiaire d'émission.

De même l'automate de réception 24 produit un signal de commande de réception CSP lorsque toutes les conditions de réception sont réunies et notamment lorsque l'intervalle de temps survenant correspond à celui affecté à la voie ou à l'une des voies temporelles réservées à l'interface de raccordement 1 en cet instant.

Chacun des registres intermédiaires 18, 19 est associé à une pluralité de registres auxiliaires dans le groupe de registres 14 ou 13 qui le comporte, et il est relié à ces registres auxiliaires par l'intermédiaire d'un bus de transfert 25 ou 26 qui dessert aussi des modules spécialisés 28, 29, 30 associés à l'émission pour le bus de transfert 25 et des modules spécialisés associés à la réception pour le bus de transfert 26.

Le registre intermédiaire d'émission 18 est

9

ainsi relié par ses entrées au bus de transfert 25 de manière à recevoir les données, provenant de l'équipement numérique 2 desservi, qui lui sont fournies octet par octet par un premier registre auxiliaire de données 27, dont les entrées sont connectées au bus d'échange 17 de l'interface 1. Ce premier registre de données 27 est commandé en lecture par l'automate d'émission 23, via une liaison CDE, lorsque les conditions d'émission, évoquées plus loin, sont remplies.

Un premier module spécialisé de décodage 28 est relié en sortie du registre auxiliaire de données 27 par l'intermédiaire du bus de transfert 25.

Ce premier module de décodage 28 de type logique câblée, a pour objet de détecter les octets drapeaux de début de message et de commande ainsi que les octets, dits vides, émis sur la liaison unidirectionnelle 3E lorsque la ou les voies d'émission réservées à un circuit interface 1 sont temporairement inexploitées par cette interface de raccordement.

Le premier module de décodage 28 est relié à l'automate d'émission 23 par une liaison ici référencée IDC de manière à l'informer de la fourniture des octets spécifiques, évoqués ci-dessus, par le registre auxiliaire de données 27 au registre intermédiaire d'émission 18.

Un premier module de test 29 est relié en sortie du registre auxiliaire de données 27 par l'intermédiaire du bus de transfert 25, il a pour objet de vérifier la rectitude du message transmis. En ce but on établit pour chaque octet, transmis par le registre auxiliaire de données 27, un octet de contrôle par exemple du type à redondance cyclique CRC obtenu en effectuant une opération de type OU exclusif entre chaque bit de l'octet transmis et le bit de même rang de l'octet de contrôle CRC établi pour l'octet précédemment transmis et l'on transmet au registre intermédiaire d'émission 18, en fin de message, le dernier octet de contrôle CRC calculé afin de permettre la comparaison de cet octet de contrôle CRC avec celui qui est calculé identiquement par l'équipement numérique 2 récepteur.

Le premier module de test 29, relié de manière bidirectionnelle au bus de transfert 25, est également relié à l'automate d'émission 23, d'une part par une liaison référencée ITS pour le contrôle des résultats du calcul des octets de contrôle CRC successifs et d'autre part par une liaison de commande référencée CME déclenchant la transmission au registre intermédiaire d'émission 18 du dernier octet de contrôle CRC destiné à être envoyé en fin de message.

Un premier module de longueur 30 est également relié en sortie du registre auxiliaire de données 27 par le bus de transfert 25 dans l'argencement de commande 16; il est commandé comme ceux-ci par l'automate d'émission 23 via une liaison référencée CME.

Ce premier module de longueur 30 reçoit les octets d'indication de longueur des messages à émettre, qui lui sont fournis par le microprocesseur 5 de l'équipement numérique 2 associé, pour les messages de grande longueur; il est

10

constitué d'un décompteur classique prépositionné par l'octet d'indication de longueur fourni pour un message et actionné au décomptage par le circuit de l'automate d'émission 23 via la liaison référencée CME, à chaque émission d'octet sur la liaison unidirectionnelle d'émission 3E. En fin de décomptage à partir d'une position prédéfinie par un octet d'indication de longueur, le premier module de longueur 30 fournit en conséquence une indication de fin de message en cours par l'intermédiaire d'une liaison référencée ILG.

Un registre auxiliaire, dit de mode, 31 est connecté par le bus d'échange 17 en sortie du groupe de registres tampons 15. Ce registre auxiliaire de mode 31 est destiné à mémoriser, au profit de l'automate d'émission 23, des indications spécifiques d'émission qui lui sont fournies par le microprocesseur 5, via son bus de liaison 7 et le groupe de registres tampons 15.

Ces indications d'émission définissent le protocole d'émission retenu par le microprocesseur 5 émetteur, elles sont mémorisées sous forme binaire par les bits de rangs différents d'un octet spécifique comportant notamment une position de bit de demande d'envoi de message, une autre de demande d'envoi d'octet sans procédure de contrôle, en particulier sans test CRC tel qu'évoqué plus haut, une autre d'arrêt d'émission et au moins encore une autre de remise a zéro pour l'envoi d'octets successifs vides sur commande du microprocesseur 5.

Il y a donc possibilité de choisir le protocole d'émission le mieux adapté au message à transmettre, et en particulier d'utiliser une procédure peu consommatrice d'octets pour un message court.

Un registre auxiliaire, dit de bourrage, 32 est également prévu connecté en parallèle aux registres auxiliaires 30 et 31 en sortie du bus 17 pour les cas où la liaison multiplexe 3 est utilisée en réseau local reliant entre eux des circuits interfaces 1 directement connectés en parallèle sur elle et ce afin de permettre l'émission d'octets spécifiques généralement répétitifs et éventuellement en nombre déterminé sur la liaison à la demande du microprocesseur 5, tels des octets de demande d'émission DE, des octets d'acquiescement, ou des octets vides. Ceci permet d'éviter l'emploi de liaisons spécifiques d'appel.

Le registre auxiliaire de bourrage 32 informe l'automate d'émission 23 de son état par la liaison référencée IOE qu'il partage ici avec le registre auxiliaire de mode 31.

Les trois registres auxiliaires 27, 31, 32 du groupe 14 pilotés par une unité d'activation 33 classique, dépendante du microprocesseur 5 et chargée de leur commande en écriture, en lecture et de leur adressage via une liaison multifilaire référencée LCE. L'unité d'activation 33 est reliée au microprocesseur 5 par une liaison d'activation CE, des liaisons de commande d'écriture WR et de lecture RD et des liaisons d'adresse A0, A1, elle assure les mêmes fonctions pour les groupes de registres de réception 13 et de registres tampons 15.

Une commande physique de remise à zéro provenant de l'équipement numérique 2 est transmise via une liaison R aux circuits impliqués notamment aux automates d'émission 23 et de réception 24 ainsi qu'au registre de bourrage 32, si besoin est.

Ainsi qu'indiqué plus haut le registre intermédiaire de réception 19 est associé à une pluralité de registres auxiliaires dans le groupe de registres 13 qui le comporte.

Un second registre auxiliaire de données 34 est relié par ses entrées aux sorties du registre intermédiaire de réception 19, via le second bus de transfert 26, de manière à recevoir successivement les octets parvenus par la liaison unidirectionnelle de réception 3R aux intervalles de temps de voie affectés à l'équipement numérique 2 ou plus spécifiquement à son circuit interface 1.

Ce registre auxiliaire de données 34 inscrit les octets reçus du registre intermédiaire de réception, sous la commande de l'automate de réception 24, relié à ses entrées d'écriture par une liaison référencée COR et il transmet ces octets au bus d'échange 17 à destination du groupe de registres tampons 15 sous la commande de l'unité d'activation 33 reliée à lui par une liaison de commande référencé LCR.

Un second module spécialisé de décodage 35, identique au premier module de décodage 28, est relié par le bus de transfert 26 en sortie du registre intermédiaire de réception 19, il détecte les octets drapeaux de début de message ou de commande et les octets vides apparaissant en sortie de registre intermédiaire de réception 19 pour en informer l'automate de réception 24, via une liaison référencée RDC.

Un second module de longueur 36, identique au premier module de longueur 30, reçoit les octets d'indication de longueur transmis en tête des messages de grande longueur parvenant via la liaison unidirectionnelle de réception 3R et le registre intermédiaire de réception 19. Ce second module de longueur 36 fournit une indication de fin de message à l'automate de réception 24, via une liaison référencée RLG, après comptage d'un nombre d'octets correspondant à la longueur indiquée pour un message à recevoir.

Un second module de test 37, analogue au premier module de test 29, est relié en parallèle aux modules 35, 36 en sortie de registre intermédiaire de réception 19 via le bus de transfert 26, il assure le calcul d'un octet de contrôle CRC pour chaque octet transmis et il assure la comparaison du dernier octet de contrôle CRC calculé pour un message avec l'octet de contrôle CRC transmis à la suite des données de ce message, afin d'informer l'automate de réception 24 du résultat de cette comparaison, par l'intermédiaire d'une liaison référencée CRC.

Les seconds modules 35, 36, 37 de l'agencement de commande 16 sont contrôlés individuellement par adressage sélectif à partir de l'automate de réception 24 par l'intermédiaire d'une liaison référencée CMR.

Un registre auxiliaire d'état 38 est relié d'une part au bus de transfert 26 par ses entrées et ses sorties, d'autre part au bus d'échange 17 par ses seules sorties, il mémorise l'état du circuit interface 1 tant en émission qu'en réception, afin d'en informer le microprocesseur 5 de l'équipement numérique associé et de permettre la transmission éventuelle de ces informations sous forme d'au moins un octet d'état, par l'intermédiaire de la liaison unidirectionnelle d'émission 3E. Dans l'exemple présenté ici, le registre auxiliaire d'état 38 traduit les états d'occupation du circuit interface 1 en émission et en réception, les états de fin d'émission et de fin de réception de message de données, la fin d'un message de commande reçu, la similitude ou la différence entre octet de contrôle CRC de fin de message reçu et octet calculé par le second module de test 37, et enfin le non rechargement du premier registre auxiliaire de données 27 en temps utile en cours de transmission et la non lecture du second registre auxiliaire de données 34 en temps utile en cours de transmission, par autant de bits indépendants, de manière à prendre les mesures de commande et de sauvegarde nécessaires.

Au moins un et préférablement deux registres auxiliaires de commande 39 et 40 assurent la mémorisation des octets de commande fournis usuellement sous forme de deux octets successifs par le fil de réception 3R au profit du microprocesseur 5 de l'équipement numérique 2 associé, comme indiqué plus haut.

En ce but ces deux registres auxiliaires de commande 39, 40 sont insérés entre le bus de transfert 2b et le bus d'échange 17, ils sont commandés, de même que les registres auxiliaires de données 34 et d'état 38, par l'automate de réception 24, via une liaison référencée COR, et par l'unité d'activation 33, via une liaison référencée LCR en vue de leurs commandes respectives en écriture et en lecture.

L'automate de réception 24 commande aussi une unité de signalisation 41 en fonction de ses états caractéristiques.

Cette unité de signalisation 41 fournit, à destination d'un registre non figuré du microprocesseur 5, une suite de bits d'état, tels:

-     un bit BR d'indication de décodage d'un octet drapeau de début de message,
-     un bit EMR et un bit ECR respectivement de fin de message reçu et de fin de commande reçue,
-     un bit RR et un bit TR d'indication de la disponibilité du circuit interface 1 respectivement en réception et en transmission,
-     un bit ET de fin d'émission de message par le circuit interface 1.

En émission, le circuit interface 1 envoie classiquement ses messages de commande sur une voie temporelle qui lui est affectée sur la liaison unidirectionnelle d'émission et ses messages de données sur cette voie éventuellement associée à d'autres pour former un canal large bande, et il reçoit identiquement les messages de commande qui lui sont destinés par une voie temporelle de la liaison unidirectionnelle de réception 3R à laquelle sont éventuellement associées d'autres voies temporelles de cette même liaison pour former un canal large bande, si un tel canal est nécessaire à la transmission des données vers ce circuit interface 1.

De manière classique qui ne sera pas décrite plus avant ici l'agencement de commande 16 assure les différentes phases nécessaires aux échanges de données à travers l'interface 1, en fonction des états précédents de l'automate et des commandes reçues d'une part du microprocesseur 5 de l'équipement numérique associé, d'autre part via la liaison unidirectionnelle de réception 3R de la liaison multiplexe temporelle 3.

## Revendications

1. Circuit interface de raccordement (1), d'un équipement numérique (2) émetteur-récepteur de données numériques à une liaison multiplexe temporelle(3) bidirectionnelle apte à transmettre, sous forme d'octets, des signaux de parole convertis sous forme binaire adéquate par des circuits interfaces spécialisés (8) reliés en parallèle à la liaison multiplexe temporelle (3), ou des données numériques, sous le contrôle d'un module d'horloge (11) externe régissant les émissions et les réceptions d'octets au moyen de signaux d'horloge ainsi que de signaux de synchronisation associés aux différentes voies disponibles au cours de chaque trame sur la liaison multiplexe temporelle (3), ledit circuit interface de raccordement comportant un agencement de synchronisation (12) composé en premier lieu d'un générateur local d'horloge (20), apte à recevoir du module d'horloge (11) un signal d'horloge commun (MCLK) nécessaire au fonctionnement interne du circuit interface et un signal d'horloge de contrôle de débit en liaison (BCLK) dont la fréquence est égale ou sous multiple de celle du signal d'horloge commun et en second lieu deux unités de sélection de voies l'une en émission (21) l'autre en réception (22), aptes à recevoir les signaux de synchronisation des voies temporelles correspondantes (SYE1, SYR1), et desservant un équipement numérique (2) émetteur-récepteur de données au moins partiellement auto-géré par un microprocesseur (5) desservi par un bus de liaison (7) au moyen duquel les données à émettre et à recevoir sont échangées, caractérisé en ce qu'il est doté d'une borne d'émission de bits (3E1) et d'une borne de réception de bits (3R1) permettant de le relier aux fils correspondants (3E, 3R) de la liaison multiplexe temporelle (3) en parallèle avec d'autres circuits interface (1 ou 8) d'équipements émetteurs récepteurs de données numériques (2) ou de signaux de paroles (4) de manière à obtenir une connexion de circuit interface de raccordement (1) à la liaison multiplexe numérique qui soit identique à celle prévue pour les circuits interfaces (8) de conversion des signaux de parole et une adaptation automatique aux possibilités de débit offertes par la liaison multiplexe temporelle choisie, et en ce qu'il comporte un groupe de registres tampons (15) inséré entre l'équipement numérique (2), au bus de liaison (7) duquel il est relié pour les échanges de données, et deux groupes de registres l'un d'émission (14), l'autre de réception (13) respectivement reliés l'un à la borne d'émission (3E1)et l'autre à la borne de réception (3R1) du circuit, les trois groupes de registres (13, 14, 15) étant pilotés par un agencement de commande (16) assurant simultanément le pilotage du groupe de registres de réception (13) et d'émission (14) en liaison avec l'agencement de synchronisation (12) et le pilotage du groupe de registres tampons (15) sous le contrôle du microprocesseur (5) de l'équipement numérique (2) desservi.

2. Circuit interface de raccordement selon la revendication 1, caractérisé en ce que les groupes de registres de réception (13) et d'émission (14) comportent identiquement un registre intermédiaire (18 ou 19) relié d'une part, en dérivation sur la liaison multiplexe temporelle (3) soit pour en recevoir, soit pour y émettre des messages composés d'octets, d'autre part à un bus de transfert (25 ou 26) reliant respectivement, l'un le registre intermédiaire de réception (19) à des registres auxiliaires spécialisés de réception (34, 38, 39, 40) d'octets notamment de données, d'état ou de commande, reçus de la liaison multiplexe temporelle (3), l'autre le registre intermédiaire d'émission (18) à des registres auxiliaires spécialisés (27, 32) d'émission d'octets, notamment de données ou de signalisation à émettre sur la liaison temporelle, de manière à permettre la mémorisation de ces octets pour des durées différentes.

3. Circuit interface de raccordement selon la revendication 2, caractérisé en ce que l'agencement de commande (16) comporte un double automate d'émission et de réception (23, 24) pilotant l'accès aux registres intermédiaires d'émission (18) et de réception (19), l'écriture en registres spécialisés de réception et la lecture en registres spécialisés d'émission, ainsi qu'une unité d'activation (33) contrôlée par l'équipement numérique (2) desservi et pilotant l'accès au groupe de registres tampons (15), l'écriture en registres spécialisés d'émission et la lecture en registres spécialisés de réception, à partir des informations fournies par l'automate de réception (24) à l'équipement numérique, via une unité de signalisation (41).

4. Circuit interface de raccordement selon la revendication 3, caractérisé en ce qu'il comporte au moins un registre auxiliaire (31) dit de mode, mémorisant des indications spécifiques d'émission, qui définissent les octets de commande à émettre, au profit de l'automate d'émission (23) de l'agencement de commande (16) pour permettre d'adapter les messages émis aux besoins formulés soit par le microprocesseur (5) de l'équipement numérique (2) desservi, soit via la liaison multiplexe (3).

5. Circuit interface de raccordement selon la revendication 3, caractérisé en ce que les registres auxiliaires d'émission comprennent au moins un registre de bourrage (32) pour mémoriser des octets répétitifs de signalisation sous la commande de l'automate d'émission (23) en vue de leur émission cyclique sur la liaison multiplexe (3) par l'intermédiaire du registre intermédiaire d'émission (18) et sous le contrôle de l'agencement de commande (16).

## Claims

1. An interface circuit (1) for connecting a digital equipment (2) for transmitting and receiving digital data to a two-way time multiplex link (3) suitable for transmitting in byte form digital data or speech signals converted into a suitable binary form by specialized interface circuits (8) connected in parallel to the time multiplex link (3), under the control of an external clock module (11) governing byte transmission and reception by means of clock signals and synchronization signals which are associated with the different time slots available during each frame of the time multiplex link (3), said connection interface circuit (1) comprising a synchronization arrangement (12) including firstly a local clock generator (20) suitable for receiving from the clock module (11) a common clock signal (MCLK) needed for ensuring the internal operation of the interface circuit, and a link bit rate (BCLK) controlling clock signal whose frequency is equal to the frequency of the common clock signal or to a submultiple thereof, and secondly two time slot selection units, one for transmission (21) and the other for reception (22) suitable for receiving the synchronization signals (SYE1, SYR1) from the corresponding time slots, the interface circuit serving a digital equipment (2) for sending and receiving data, which equipment is at least partially self-controlled by a microprocessor (5) served by a link bus (7) over which the data to be transmitted and received are interchanged, characterized in that it is provided with a bit transmission terminal (3E1) and a bit reception terminal (3R1) enabling it to be connected to the corresponding wires (3E, 3R) of the time multiplex link (3) in parallel with other interface circuits (1 or 8) of equipments for transmitting and receiving digital data (2) or speech signals (4), in such a manner as to obtain a connection between the connection interface circuit (1) and the time multiplex link which is identical to the connection provided for the interface circuits (8) for converting speech signals, and an automatic adaptation to the bit rate capacity provided by the selected time multiplex link (3), and that it includes a group of buffer registers (15) inserted between the digital equipment (2), to the link bus (7) to which it is connected for data interchanges, and two groups of registers, one for transmission (14) and the other for reception (13), one of which is connected to the transmission terminal (3E1) and the other of which is connected to the reception terminal (3R1) of the circuit, the three groups of registers (13, 14, 15) being driven by a control arrangement (16) for simultaneously driving the reception and transmission groups of registers (13 and 14) in connection with the synchronization arrangement (12) and for driving the group of buffer registers (15) under the control of the microprocessor (5) of the digital equipment (2) served thereby.

2. A connection interface circuit according to claim 1, characterized in that the reception and transmission groups of registers (13, 14) identically include an intermediate register (18 or 19) which is connected firstly in parallel on the time multiplex link (3) either to receive or to send messages made up of bytes, and secondly to a transfer bus (25 or 26), one connecting the intermediate receive register (19) to specialized auxiliary receive registers (34, 38, 39 40) for receiving data bytes, status bytes or control bytes, received over the time multiplex link (3), and the other connecting the intermediate send register (18) to specialized auxiliary registers (27, 32) for sending bytes, in particular data bytes or signalling bytes to be sent over the time multiplex link, in such a manner as to store said bytes for different periods.

3. A connection interface circuit according to claim 2, characterized in that control arrangement (16) includes a twopart send and receive automaton (23, 24) controlling access to the intermediate send and receive registers (18, 19), writing to the specialized receive registers and reading from the specialized transmit registers, and also an activation unit (33) controlled by the associated digital equipment (2) controlling access to the group of buffer registers (15), writing to the specialized send registers and reading from the specialized receive registers, on the basis of information provided by the receive automaton (24) to the digital equipment via a signalling unit (41).

4. An interface connection circuit according to claim 3, characterized in that it includes at least one auxiliary or mode register (31) for storing information specific to transmission, which information defines the control bytes to be transmitted for use by the send automaton (23) of the control arrangement (16) in order to adapt the messages sent to the requirements expressed either by the microprocessor (5) of the associated digital equipment (2), or else via the multiplex link (3).

5. A connection interface circuit according to claim 3, characterized in that the auxiliary send registers include at least one stuffing register (32) for storing repetitive signalling bytes under the control of the send automaton (23) for cyclically sending them over the multiplex link (3) via the intermediate send register (18) and under the control of the control arrangement (16).

**Patentansprüche**

1. Schnittstellenschaltung (1) zur Verbindung einer digitalen Sende-Empfangsanlage (2) für digitale Daten mit einer bidirektionalen Zeitmultiplexstrecke (3), die in der Lage ist, in Oktettform Sprachsignale, welche durch spezifische, parallel mit der Zeitmultiplexstrecke (3) verbundene Schnittstellenkreise (8) in geeignete Binärform umgewandelt wurden, oder binäre Daten unter der Kontrolle eines äußeren Taktmoduls (11) zu übertragen, der die Aussendung und den Empfang von Oktetten durch Takt- sowie Synchronisierungssignale steuert, die im Verlauf jedes Rahmens den verschiedenen auf der Zeitmultiplexstrecke (3) verfügbaren Kanälen zugeordnet sind: wobei die Schnittstellenschaltung eine Synchronisierungseinrichtung (12) aufweist, die in erster Linie einen örtlichen Taktgenerator (20) aufweist, der in der Lage ist, vom Taktmodul (11) ein für den internen Betriebsablauf der Schnittstellenschaltung benötigtes gemeinsames Taktsignal (MCLK) und ein Steuertaktsignal der Streckenbitrate (BCLK) zu empfangen, dessen Frequenz derjenigen des gemeinsamen Taktsignals oder eines Untervielfachen davon entspricht, und die in zweiter Linie zwei Kanalwahleinheiten aufweist, eine für Sendebetrieb (21), und die andere für Empfangsbetrieb (22), die in der Lage sind, die entsprechenden Synchronisierungssignale (SYE1, SYR1) zu empfangen, und wobei die Schnittstellenschaltung (1) eine digitale Sende-Empfangsanlage (2) für Daten bedient, welche mindestens teilweise durch einen Mikroprozessor (5) selbstverwaltet wird, der über eine Verbindungsschiene gesteuert wird, mit deren Hilfe die zu sendenden und zu empfangenden Daten ausgetauscht werden, dadurch gekennzeichnet, daß die Schaltung mit einem Bitsendeanschluß (3E1) und einem Bitempfangsanschluß (3R1) ausgestattet ist, welche sie mit den entsprechenden Drähten (3E, 3R) der Zeitmultiplexstrecke (3) parallel zu anderen Schnittstellenschaltungen (1 oder 8) von Sende-Empfangsanlagen für digitale Daten (2) oder für Sprachsignale (4) zu verbinden erlauben, derart, daß eine Verbindung der Schnittstellenschaltung (1) mit der digitalen Multiplexstrecke erhalten wird, die derjenigen für die Schnittstellenkreise (8) zur Umwandlung der Sprachsignale und zur automatischen Anpassung an die von der gewählten Zeitmultiplexstrecke (3) gebotenen Durchsatzmöglichkeiten vorgesehenen Verbindung gleicht, und daß die Schaltung eine Gruppe von Pufferregistern (15), die in die Digitalanlage (2), an deren Verbindungsschiene (7) sie zum Datenaustausch angeschlossen ist, eingefügt ist, und zwei Registergruppen aufweist, eine für Sendebetrieb (14) und die andere für Empfangsbetrieb (13), von denen die eine an den Sendeanschluß (3E1) und die andere an den Empfangsanschluß (3R1) der Schaltung angeschlossen ist, wobei die drei Registergruppen (13, 14, 15) durch eine Steuereinrichtung (16) gesteuert werden, die gleichzeitig die Steuerung der Gruppe von Empfangsregistern (13) und Senderegistern (14) in Verbindung mit der Synchronisierungseinrichtung (12) und die Steuerung der Pufferregistergruppe (15) unter der Kontrolle des Mikroprozessors (5) der gesteuerten Digitalanlage (2) durchführt.

2. Schnittstellenverbindungsschaltung nach Anspruch 1, dadurch gekennzeichnet, daß die Empfangsregister- (13) und Senderegistergruppen (14) in gleicher Weise ein Zwischenregister (18 oder 19) aufweisen, das einerseits parallel an die Zeitmultiplexstrecke (3) entweder zum Empfang oder zum Senden von aus Oktetten zusammengesetzten Nachrichten, andererseits an eine Übertragungsschiene (25 oder 26) angeschlossen ist, von denen eine (25) das Empfangszwischenregister (19) mit spezifischen Empfangshilfsregistern (34, 38, 39, 40) für Oktette, hauptsächlich von Datenoktetten, Statusoktetten oder Steueroktetten verbindet, die über die Zeitmultiplexstrecke (3) empfangen werden, und die andere (26) das Sendezwischenregister (18) mit spezifischen Sendehilfsregistern (27, 32) für Oktette, hauptsächlich Datenoktette oder Signalisationsoktette verbindet, die über die Zeitmultiplexstrecke zu senden sind, derart, daß diese Oktette für unterschiedliche Zeitdauern gespeichert werden können.

3. Schnittstellenverbindungsschaltung nach Anspruch 2, dadurch gekennzeichnet, daß die Steuereinrichtung (16) einen Sende- und Empfangsdoppelautomaten (23, 24), der den Zugang zu den Sende- (18) und Empfangszwischenregistern (19), das Einschreiben in spezifische Empfangsregister und das Auslesen aus dem spezifischen Senderegister steuert, sowie eine Aktivierungseinheit (33) aufweist, die von der zugeordneten Digitalanlage (2) gesteuert wird und den Zugang zur Pufferregistergruppe (15), das Einschreiben in spezifische Senderegister, und das Auslesen aus spezifischen Empfangsregistern steuert, und zwar aufgrund von Informationen, die vom Empfangsautomaten (24) über eine Signalisationseinheit (41) an die Digitalanlage geliefert werden.

4. Schnittstellenverbindungsschaltung nach Anspruch 3, dadurch gekennzeichnet, daß sie mindestens ein Hilfregister (31), Modusregister genannt, aufweist, das die spezifischen Sendeangaben speichert, welche die zu sendenden Steueroktette für den Sendeautomaten (23) der Steuereinrichtung (16) definieren, um die gesendeten Nachrichten den Bedürfnissen anzupassen, die entweder vom Mikroprozessor (5) der betreffenden Digitalanlage (2) oder über die Multiplexstrecke (3) formuliert werden.

5. Schnittstellenverbindungsschaltung nach Anspruch 3, dadurch gekennzeichnet, daß die Sen-

19

dehilfsregister mindestens ein Stauregister (32) aufweisen, um die sich wiederholenden Signalisationsoktette unter dem Befehl des Sendeautomaten (23) zyklisch über die Multiplexstrecke (3) zu speichern, und zwar über das Sendezwischenregister (18) und unter der Kontrolle der Steuereinrichtung (16).

11

FIG.1

# FIG. 2A

FIG. 2B

FIG. 2B

# FIG. 2C